# EUROPEAN PATENT SPECIFICATION

(11) **EP 2 669 158 B1**
(45) Date of publication and mention of the grant of the patent: **19.03.2014**
(21) Application number: 12189008.1
(22) Date of filing: 18.10.2012
(51) Int. Cl.: B62H 1/02, B62J 17/00, B62K 11/10

(54) **Straddle type vehicle**
Grätschsitz-Fahrzeug
Véhicule de type à selle

(30) Priority: 28.05.2012 JP 2012120765
(43) Date of publication of application: 04.12.2013
(73) Proprietor: Yamaha Hatsudoki Kabushiki Kaisha, Iwata-shi, Shizuoka 438-8501 (JP)
(72) Inventor: Nakasai, Makoto, Shizuoka, 438-8501 (JP)
(74) Representative: Zimmermann, Tankred Klaus

(56) References cited:
- EP-A1- 2 151 606
- EP-A2- 2 327 615
- JP-A- 2003 063 469

## Description

### BACKGROUND

### Technical Field

The present invention relates to straddle type vehicles. More particularly, the present invention relates to the undercover included in a straddle type vehicle.

### Description of the Background Art

Straddle type vehicles include motorcycles, for example. Some motorcycles, as disclosed in JP 2003-63469 A, for example, include a switch for sensing the state of the side stand.

### SUMMARY

It is an object of the present invention to provide a straddle type vehicle where muddy water is unlikely to hit the side stand even if a bulge is included.

This object is achieved by a straddle-type vehicle according to claim 1.

According to JP 2003-63469 A, the switch is located inside the undercover. Accordingly, the undercover includes a bulge that covers the switch.

The inventors recognized that in a motorcycle as described in JP 2003-63469 A, while the motorcycle is running, the front wheel may splash muddy water toward the rear. Muddy water splashed up by the front wheel may adhere to the undercover. The muddy water adhering to the undercover flows rearward.

Some muddy water flowing on the surface of the undercover may flow on the surface of the bulge. Air flow generated when the vehicle is running may cause muddy water flowing on the surface of the bulge to fly off the rear edge of the bulge toward the rear and hit the side stand.

A straddle type vehicle of the present invention includes: a footboard; an undercover; and a switch. The undercover is located below the footboard. An opening exposing a side stand is formed in the undercover. The switch is located inside the undercover to sense a state of the side stand. The undercover includes a bulge. The bulge is formed forward of the opening to protrude from a surface of the undercover. The bulge includes: a first wall; a second wall; and a recess. The first wall overlaps the switch as viewed in a side view of the vehicle. The second wall, together with the first wall, forms a ridge extending in a front-to-rear direction of the vehicle, and overlaps the switch as viewed in a bottom view of the vehicle. The recess is formed on a surface of the second wall. The recess includes: a guide surface; and a discharge surface. The guide surface is continued from a region of the surface of the undercover that is located forward of the recess and extends in a front-to-rear direction of the vehicle. The discharge surface is formed adjacent a rear edge of the guide surface. The discharge surface spreads as viewed in a vehicle width direction.

In the straddle type vehicle of the present invention, muddy water is unlikely to hit the side stand even if a bulge is included.

### BRIEF DESCRIPTION OF THE DRAWINGS

FIG. 1 is a left side view of an entire motorcycle according to an embodiment of the present invention.
FIG. 2 is a left side view of a portion of the motorcycle illustrating the unused state of the side stand.
FIG. 3 is a bottom view of a portion of the motorcycle illustrating the unused state of the side stand.
FIG. 4 is a left side view of a portion of the motorcycle illustrating the used state of the side stand.
FIG. 5 is a cross-sectional view taken on line V-V of FIG. 2.
FIG. 6 is a left side view of a portion of the motorcycle illustrating Application 1 of the recess.
FIG. 7 is a left side view of a portion of the motorcycle illustrating Application 2 of the recess.

### DESCRIPTION OF THE EMBODIMENTS

A switch is needed to sense the state of the side stand. The switch may be located inside the undercover so as to be protected from muddy water. In this case, a bulge is formed on the undercover in a location corresponding to the switch. Thus, some of the muddy water flowing on the surface of the undercover while the vehicle is running may flow on the surface of the bulge. Air flow generated when the vehicle is running may cause the muddy water flowing on the surface of the bulge to fly off the rear edge of the bulge toward the rear. The bulge protrudes from the surface of the undercover. This may cause a vortex behind the bulge while the vehicle is running. Moreover, a negative pressure may be generated behind the bulge. As a result, muddy water flying off the bulge toward the rear may hit the side stand located rearward of the bulge. If muddy water is on the side stand, the switch may not be able to correctly sense the state of the side stand. In addition, if muddy water that has splashed on the side stand flies off, it may hit the rider.

The side stand may be switched between a used state and an unused state as the rider operates it with his foot. Consequently, locating the side stand inside the undercover to prevent muddy water from hitting the side stand will lead to decreased operability of the side stand. In view of this, there is a need for an arrangement for making it unlikely that muddy water will hit the side stand while maintaining the operability of the side stand.

To make it unlikely that muddy water will hit the side stand, the degree to which the bulge protrudes from the surface of the undercover may be reduced, for example. To do this, the switch may be located further inside, for example. However, since the switch is intended to sense the state of the side stand, the side stand must also be displaced if the switch is located further inside.

Under such circumstances, the inventors of the present invention focused on modifying the shape of the bulge. Specifically, a recess may be formed on the bulge to allow muddy water coming into the recess to be discharged toward the side of the vehicle. If such a bulge is employed, muddy water will be unlikely to fly off the rear edge of the bulge toward the rear. As a result, muddy water will be unlikely to hit the side stand.

### [Embodiments]

Now, a straddle type vehicle according to an embodiment of the present invention will be described with reference to the drawings. In the present embodiment, a scooter-type motorcycle will be described as an exemplary straddle type vehicle. In the drawings, the same or corresponding components will be labeled with the same characters and their description will not be repeated.

### [Overall Arrangement]

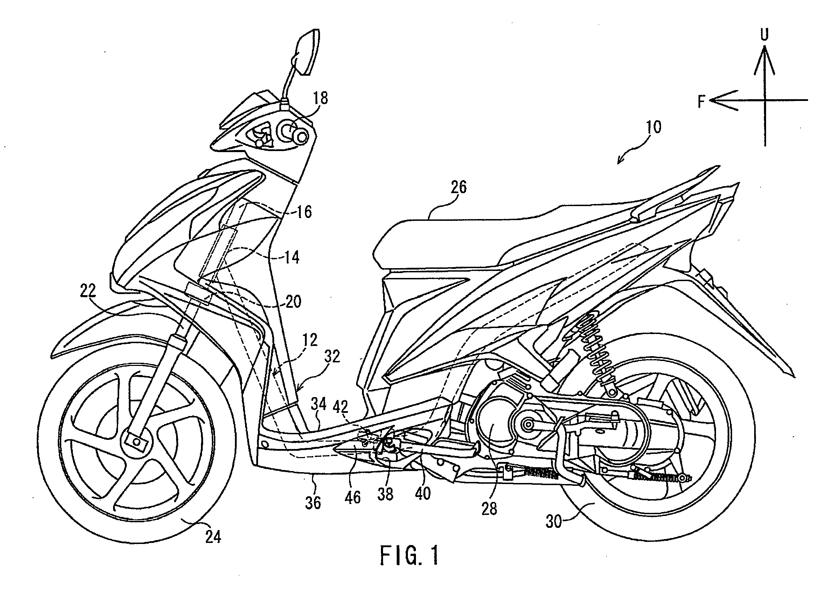

FIG. 1 is a left side view of a motorcycle 10 according to an embodiment of the present invention. In the following description, "front/forward", "behind/rear(ward)", "left" and "right" mean directions as perceived by a rider sitting on the seat 26 of the motorcycle 10. In FIG. 1, arrow F indicates the forward direction with respect to the motorcycle 10, while arrow U indicates the upward direction with respect to the motorcycle 10.

The motorcycle 10 includes a body frame 12. A head pipe 14 is provided on the front end of the body frame 12.

A steering shaft 16 is inserted into the head pipe 14, the steering shaft 16 being rotatable to the left and right. Handlebars 18 are attached to the upper end of the steering shaft 16. The steering shaft 16 may be rotated by operating the handlebars 18.

A bracket 20 is attached to the lower end of the steering shaft 16. The top end of a front fork 22 is attached to the bracket 20. The front fork 22 rotatably supports a front wheel 24.

A seat 26 is located above the rear of the body frame 12. A storage space is formed below the seat 26. The storage space may store, for example, a helmet.

A power unit 28 is located below the rear of the body frame 12. The body frame 12 supports the power unit 28, the power unit being swingable in a top-to-bottom direction.

A rear wheel 30 is rotatably attached to the rear end of the power unit 28. As power from the power unit 28 is transmitted to the rear wheel 30, the rear wheel 30 is rotated.

The body frame 12 is covered with a body cover 32. The body cover 32 includes a footboard 34 and an undercover 36.

The footboard 34 is a member on which the rider sitting on the seat 26 can place his feet. The footboard 34 covers a portion of the body frame 12 from above. The footboard 34 is located between the handlebars 18 and the seat 26 as viewed in a side view of the vehicle. The rear of the footboard 34 is located below the seat 26 as viewed in a side view of the vehicle.

### [Undercover]

The undercover 36 is located below the footboard 34. The undercover 36 covers a portion of the body frame 12 from below.

The undercover 36 includes an opening 38. The opening 38 exposes a side stand 40.

A switch 42 is located forward of the side stand 40. The switch 42 senses the state of the side stand 40.

### [Operations of Switch]

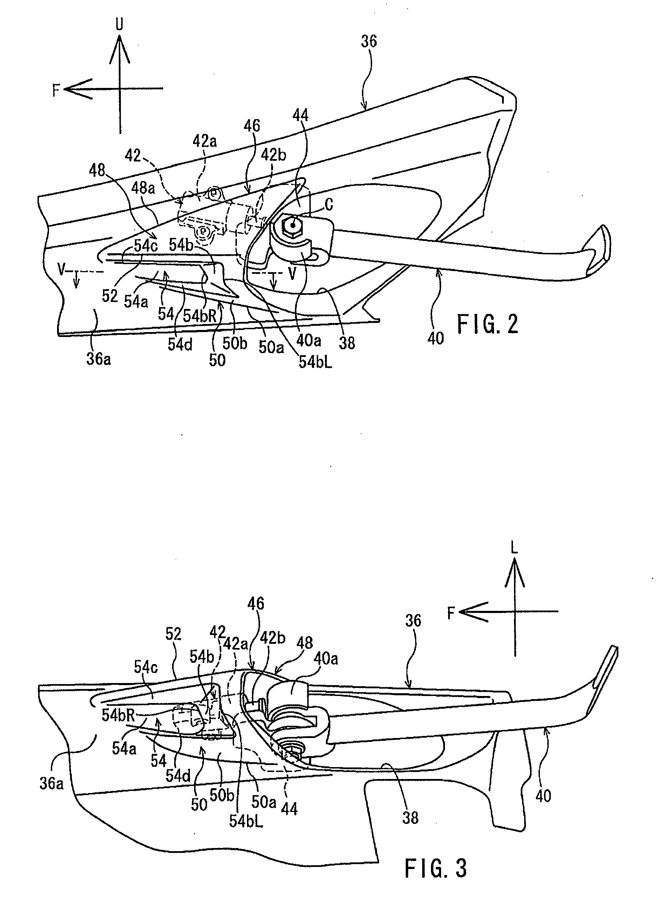

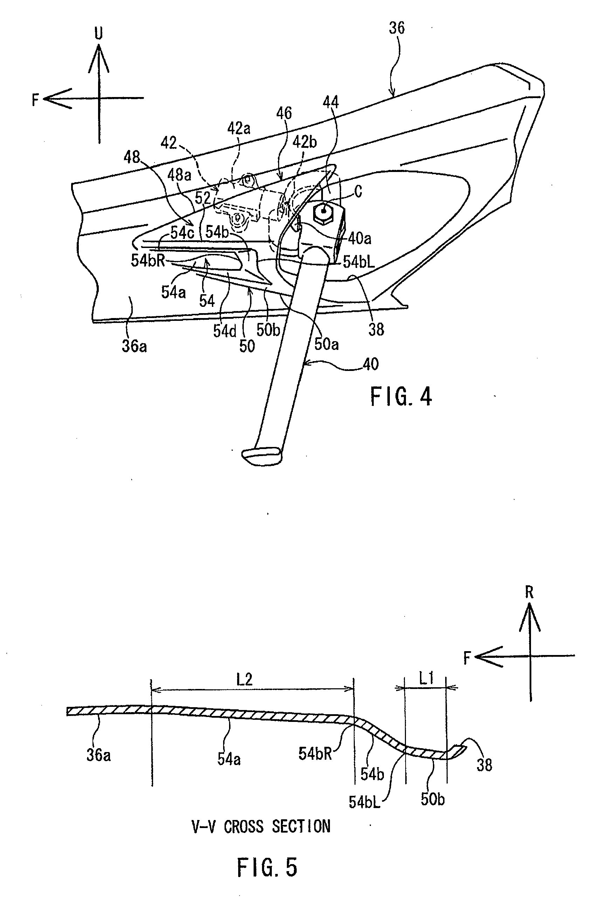

Referring to FIGS. 2 to 4, how the state of the side stand 40 may be sensed by the switch 42 will be described. FIG. 2 is a left side view of a portion of the motorcycle illustrating the unused state of the side stand 40. FIG. 3 is a bottom view of a portion of the motorcycle illustrating the unused state of the side stand 40. FIG. 4 is a left side view of a portion of the motorcycle illustrating the used state of the side stand 40.

The side stand 40 is rotatably attached to a bracket 44. The bracket 44 is attached to the body frame 12, for example.

The side stand 40 includes a contact member 40a. The contact member 40a is located around the rotation center, C, of the side stand 40.

As shown in FIG. 2, the contact member 40a is located within the opening 38 as viewed in a side view of the vehicle. As shown in FIG. 3, the contact member 40a is located within the opening 38 as viewed in a bottom view of the vehicle.

The switch 42 is fixed to a bracket. The bracket is fixed to the body frame 12, for example. The bracket to which the switch 42 is fixed may be integrally formed with the bracket 44, for example, or may be separate from the bracket 44.

The switch 42 includes a body 42a and a rod 42b. The rod 42b is displaceable relative to the body 42a.

When the side stand 40 is in the unused state, as shown in FIGS. 2 and 3, the contact member 40a is located rearward of the rod 42b of the switch 42. A gap is formed between the contact member 40a and the rod 42b. In this case, the switch 42 senses that the side stand 40 is in the unused state.

When the side stand 40 is in the used state, as shown in FIG. 4, the contact member 40a contacts the rod 42b and pushes the rod 42b into the body 42a. In this case, the switch 42 senses that the side stand 40 is in the used state.

The switch 42 is located inside the undercover 36. As shown in FIGS. 2 and 3, the undercover 36 includes a bulge 46 overlapping the switch 42 as viewed in both a side view and a bottom view of the vehicle.

### [Bulge]

The bulge 46 will be described with reference to FIGS. 2 and 3. The bulge 46 is formed forward of the opening 38 to protrude from the surface 36a of the undercover 36.

The bulge 46 has a larger protrusion height, as measured from the surface 36a of the undercover 36, in its rear than in its front, as defined similarly to those of the vehicle. In the present embodiment, the protrusion height measured from the surface 36a of the undercover 36 is at its largest in the vicinity of the rear end of the body 42a of the switch 42.

As viewed from a side of the vehicle, the bulge 46 has a larger top-to-bottom dimension in its rear than in its front (see FIG. 2). That is, as viewed from a side of the vehicle, the upper edge 48a of the first wall 48 has rear portions located higher than its front portions. Further, as viewed from a side of the vehicle, the lower edge 50a of the second wall 50 has rear portions located lower than its front portions. As viewed from a side of the vehicle, the lower edge (or the rear end of the lower edge 50a) of the bulge 46 is located lower than the side stand 40 (see FIG. 2).

As viewed from the bottom of the vehicle, the bulge 46 has a larger left-to-right dimension in its rear than in its front (see FIG. 3). As viewed in a bottom view of the vehicle, a portion of the bulge 46 is located outward of the edge of the undercover 36 as viewed in a vehicle width direction.

The bulge 46 includes a first wall 48 and a second wall 50. The first wall 48 is located above the second wall 50 as viewed in a side view of the vehicle. The first wall 48 overlaps the switch 42 as viewed in a side view of the vehicle. The second wall 50 overlaps the switch 42 in a bottom view of the vehicle. The second wall 50, together with the first wall 48, forms a ridge 52 that extends in a front-to-rear direction of the vehicle. The second wall 50 includes a recess 54.

### [Recess]

The recess 54 will be described with reference to FIGS. 2, 3 and 5. FIG. 5 is a cross-sectional view taken on line V-V of FIG. 2.

The recess 54 is formed on the surface of the second wall 50. The recess 54 includes a guide surface 54a, a discharge surface 54b and support surfaces 54c and 54d.

The guide surface 54a is continued from a region of the surface 36a of the undercover 36 that is located forward of the recess 54, and extends in a front-to-rear direction of the vehicle. The rear edge of the guide surface 54a is located outward of the front edge of the guide surface 54a, as viewed in a vehicle width direction (see FIG. 5).

The discharge surface 54b is formed adjacent the rear edge of the guide surface 54a. The discharge surface 54b spreads in a vehicle width direction (see FIG. 3). The discharge surface 54b is located lower than the contact member 40a (see FIG. 2). An outer end, as viewed in a vehicle width direction, of the lower edge of the discharge surface 54b is located rearward of an outer end, as viewed in a vehicle width direction, of the upper edge of the discharge surface 54b (see FIG. 3). The outer edge 54bL of the discharge surface 54b, as viewed in a vehicle width direction, is located rearward of the inner edge 54bR (see FIG. 2). The discharge surface 54b has rear portions wider than the front portions, as defined similarly to those of the vehicle (see FIG. 3).

The outer edge 54bL of the discharge surface 54b, as viewed in a vehicle width direction, is connected with the surface 50b of the second wall 50. As shown in FIG. 5, the length L1, as measured in a front-to-rear direction of the vehicle, of a region of the surface 50b of the second wall 50 that is located rearward of the discharge surface 54b is smaller than the length L2 of the guide surface 54a as measured in a front-to-rear direction of the vehicle.

The support surface 54c is formed above the guide surface 54a and discharge surface 54b and is connected with the guide surface 54a and discharge surface 54b. The support surface 54c is generally parallel to a horizontal direction. (see FIG. 2). In the present embodiment, the support surface 54c corresponds to the first support surface.

The support surface 54d is formed below the guide surface 54a and discharge surface 54b and is connected with the guide surface 54a and discharge surface 54b. The support surface 54d is generally parallel to a vertical direction. (see FIG. 3). In the present embodiment, the support surface 54d corresponds to the second support surface.

The motorcycle 10 includes: a footboard 34; an undercover 36; and a switch 42. The undercover 36 is located below the footboard 34. An opening 38 exposing a side stand 40 is formed in the undercover 36. The switch 42 is located inside the undercover 36 to sense a state of the side stand 40. The undercover 36 includes a bulge 46. The bulge 46 is formed forward of the opening 38 to protrude from a surface 36a of the undercover 36. The bulge 46 includes: a first wall 48; a second wall 50; and a recess 54. The first wall 48 overlaps the switch 42 as viewed in a side view of the vehicle. The second wall 50, together with the first wall 48, forms a ridge 52 extending in a front-to-rear direction of the vehicle, and overlaps the switch 42 as viewed in a bottom view of the vehicle. The recess 54 is formed on a surface 50b of the second wall 50. The recess 54 includes: a guide surface 54a; and a discharge surface 54b. The guide surface 54a is continued from a region of the surface 36a of the undercover 36 that is located forward of the recess 54 and extends in a front-to-rear direction of the vehicle. The discharge surface 54b is formed adjacent a rear edge of the guide surface 54a. The discharge surface 54b spreads as viewed in a vehicle width direction.

While the vehicle is running, muddy water adhering to the surface 36a of the undercover 36 flows rearward along the surface 36a of the undercover 36. At this moment, muddy water enters the recess 54. The muddy water that has entered the recess 54 flows rearward along the guide surface 54a. The muddy water that has reached the rear edge of the guide surface 54a flows along the discharge surface 54b before being discharged to the side of the vehicle. As such, muddy water is unlikely to hit the side stand 40. Further, since muddy water is unlikely to hit the contact member 40a, the switch 42 may sense the state of the side stand 40 in a sufficiently precise manner. Furthermore, since muddy water is unlikely to hit the side stand 40, muddy water that has splashed on the side stand 40 may be prevented from flying off and hitting the rider.

In the motorcycle 10, the recess 54 may further include a support surface 54c or 54d located on a side of the guide surface 54a and discharge surface 54b. In this case, the rigidity of the second wall 50 will be improved.

In the motorcycle 10, the support surface 54c or 54d may include: a first support surface 54c located above the guide surface 54a as determined according to the vehicle; and a second support surface 54d located below the guide surface 54a as determined according to the vehicle. In this case, the rigidity of the second wall 50 will be further improved.

In the motorcycle 10, the first support surface 54c may be generally parallel to a horizontal direction. In this case, muddy water flowing along the guide surface 54a is unlikely to move to above the first support surface 54c.

In the motorcycle 10, the second support surface 54d may be generally parallel to a vertical direction. In this case, muddy water flowing along the guide surface 54a passes along the second support surface 54d to be discharged downward.

In the motorcycle 10, the discharge surface 54b may have rear portions wider than front portions thereof, as defined similarly to those of the vehicle. In this case, muddy water can easily be discharged.

In the motorcycle 10, an outer edge 54bL of the discharge surface 54b, as viewed in a vehicle width direction, may be connected with a surface 50b of the second wall 50. In this case, the rigidity of the second wall 50 will be further improved.

In the motorcycle 10, the bulge 46 may have a larger protrusion height, as measured from the surface 36a of the undercover 36, in a rear portion than in a front portion, as defined similarly to those of the vehicle. In this case, air resistance will be reduced.

In the motorcycle 10, the bulge 46 may have a larger top-to-bottom dimension in a rear portion than in a front portion, as defined similarly to those of the vehicle, as viewed from a side of the vehicle. In this case, a rigidity of the bulge 46 will be ensured.

In the motorcycle 10, a length L1, as measured in a front-to-rear direction of the vehicle, of a region of the surface 50b of the second wall 50 that is located rearward of the discharge surface 54b may be smaller than a length L2 of the guide surface 54a in a front-to-rear direction of the vehicle.

In this case, the discharge surface 54b is located at the rear of the bulge 46. This facilitates spreading the discharge surface 54b in a vehicle width direction.

Moreover, muddy water flowing along the discharge surface 54b is unlikely to flow along a region of the surface 50b of the second wall 50 that is located rearward of the discharge surface 54b.

In the motorcycle 10, the discharge surface 54b may have an outer edge 54bL, as viewed in a vehicle width direction, located rearward of an inner edge 54bR. In this case, air resistance may be reduced.

In the motorcycle 10, a lower edge of the discharge surface 54b may be located rearward of an upper edge of the discharge surface 54b. In this case, muddy water on the discharge surface 54b is likely to flow downward. Thus, muddy water may be kept far from the side stand 40.

In the motorcycle 10, the side stand 40 may include a contact member 40a that contacts the switch 42 when supporting the vehicle. The contact member 40a may be located within the opening 38 as viewed in a side view of the vehicle. In this case, muddy water is unlikely to hit the contact member 40a.

In the motorcycle 10, the side stand 40 may be located higher than a lower edge of the bulge 46 as viewed in a side view of the vehicle. In this case, muddy water is unlikely to hit the side stand 40.

### [Application 1 of Recess]

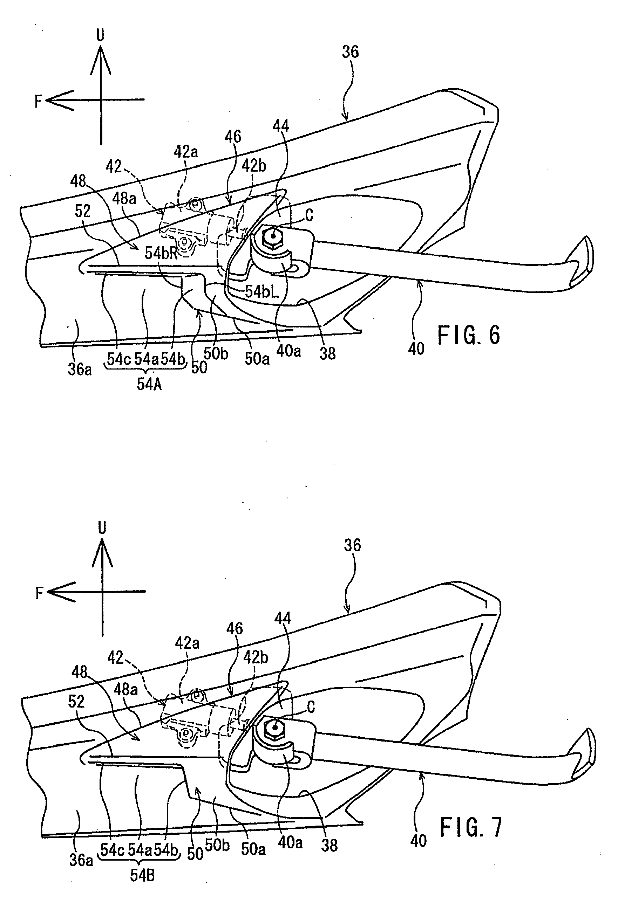

In the above embodiment, the recess need not include the first and second support surfaces. For example, as in a recess 54A shown in FIG. 6, only a first support surface 54c may be included as the support surface. That is, as shown in FIG. 6, the recess may be a recess 54A composed of a guide surface 54a, a discharge surface 54b and a first support surface 54c.

### [Application 2 of Recess]

Further, a discharge surface 54b need not have an outer edge, as viewed in a vehicle width direction, located rearward of its inner edge. For example, as in a recess 54B shown in FIG. 7, a discharge surface 54b may be generally parallel to a vehicle width direction. That is, as shown in FIG. 7, the recess may be a recess 54B composed of a guide surface 54a, a discharge surface 54b and a first support surface 54c, the discharge surface 54b being generally parallel to a vehicle width direction.

While the above embodiment has illustrated a motorcycle, the present invention is not limited thereto and may be used in a three- or four-wheeled leaning vehicle including a footboard or the like. Further, while the above embodiment employs a flat footboard, the footboard need not be a flat one. For example, a footboard divided in a vehicle width direction (i.e. a footboard with left and right footboard portions separated from each other by a raised portion located therebetween) may be employed.

Although an embodiment of the present invention has been described, the embodiment described above is merely an exemplary one that can be used to carry out the present invention. As such, the present invention is not limited to the embodiment described above.

## Claims

1. A straddle type vehicle comprising:
a footboard (34);
an undercover (36) located below the footboard (34) and comprising an opening (38) exposing a side stand (40); and
a switch (42) located inside the undercover (36) and adapted to sense a state of the side stand (40),
wherein the undercover (36) includes:a bulge (46) formed forward of the opening (38) to protrude from a surface of the undercover (36),
**characterized in that**
the bulge (46) includes:
a first wall (48) overlapping the switch (42) as viewed in a side view of the vehicle;
a second wall (50) forming, together with the first wall (48), a ridge (52) extending in a front-to-rear direction of the vehicle, and overlapping the switch (42) as viewed in a bottom view of the vehicle; and
a recess (54) formed on a surface of the second wall (50), and
the recess (54) includes:
a guide surface (54a) continued from a region of the surface of the undercover (36) that is located forward of the recess (54) and extending in a front-to-rear direction of the vehicle; and
a discharge surface (54b) formed adjacent a rear edge of the guide surface (54a) and spreading as viewed in a vehicle width direction.

2. The straddle type vehicle according to claim 1, wherein:
the recess (54) further comprises a support surface (54c, 54d) located on a side of the guide surface (54a) and discharge surface (54b).

3. The straddle type vehicle according to claim 2, wherein:
the support surface comprises:
a first support surface (54c) located above the guide surface (54a); and
a second support surface (54d) located below the guide surface (54a).

4. The straddle type vehicle according to claim 3, wherein:
the first support surface (54c) is generally parallel to a horizontal direction.

5. The straddle type vehicle according to claim 3 or 4, wherein:
the second support surface (54d) is generally parallel to a vertical direction.

6. The straddle type vehicle according to any one of claims 1 to 5, wherein:
the discharge surface (54b) has rear portions wider than front portions thereof.

7. The straddle type vehicle according to any one of claims 1 to 6, wherein:
an outer edge (54bL) of the discharge surface (54b), as viewed in a vehicle width direction, is connected with a surface (50b) of the second wall (50) of the bulge (46).

8. The straddle type vehicle according to claim 7, wherein:
the bulge (46) has a larger protrusion height, as measured from the surface of the undercover (36), in a rear portion than in a front portion.

9. The straddle type vehicle according to claim 8, wherein:
the bulge (46) has a larger top-to-bottom dimension in a rear portion than in a front portion, as viewed from a side of the vehicle.

10. The straddle type vehicle according to claim 8 or 9, wherein:
a length (L1), as measured in a front-to-rear direction of the vehicle, of a region of the surface (50b) of the second wall (50) that is located rearward of the discharge surface (54b) is smaller than a length (L2) of the guide surface (54a) in a front-to-rear direction of the vehicle.

11. The straddle type vehicle according to any one of claims 1 to 10, wherein:
the discharge surface (54b) has an outer edge (54bL), as viewed in a vehicle width direction, located rearward of an inner edge (54bR).

12. The straddle type vehicle according to any one of claims 1 to 11, wherein:
a lower edge of the discharge surface (54b) is located rearward of an upper edge of the discharge surface (54b).

13. The straddle type vehicle according to any one of claims 1 to 12, wherein:
the side stand (40) includes a contact member (40a) that contacts the switch (42) when supporting the vehicle, and
the contact member (40a) is located within the opening (38) as viewed in a side view of the vehicle.

14. The straddle type vehicle according to any one of claims 1 to 13, wherein:
the side stand (40) is located higher than a lower edge of the bulge (46) as viewed in a side view of the vehicle.

## Patentansprüche

1. Ein Grätsch-Typ-Fahrzeug, das folgende Merkmale aufweist:
ein Trittbrett (34);
eine Unterabdeckung (36), die unter dem Trittbrett (34) angeordnet ist und eine Öffnung (38) aufweist, die einen Seitenständer (40) freilegt; und
einen Schalter (42), der in der Unterabdeckung (36) angeordnet ist und angepasst ist, um einen Zustand des Seitenständers (40) zu erfassen,
wobei die Unterabdeckung (36) eine Ausbuchtung (46) umfasst, die vor der Öffnung (38) gebildet ist, um von einer Oberfläche der Unterabdeckung (36) vorzustehen,
**dadurch gekennzeichnet, dass**
die Ausbuchtung (46) folgende Merkmale umfasst:
eine erste Wand (48), die den Schalter (42) von der Seitenansicht des Fahrzeugs aus gesehen überlappt;
eine zweite Wand (50), die zusammen mit der ersten Wand (48) einen Steg (52) bildet, der sich in einer Richtung des Fahrzeugs von vorne nach hinten erstreckt, und den Schalter (42) von einer Unteransicht des Fahrzeugs aus gesehen überlappt; und
eine Ausnehmung (54), die auf einer Oberfläche der zweiten Wand (50) gebildet ist, und
die Ausnehmung (54) folgende Merkmale umfasst:
eine Führungsoberfläche (54a), die von einer Region der Oberfläche der Unterabdeckung (36) weitergeführt wird, die sich vor der Ausnehmung (54) befindet und in einer Richtung des Fahrzeugs von vorne nach hinten erstreckt; und
eine Abflussoberfläche (54b), die benachbart zu einer Hinterkante der Führungsoberfläche (54a) gebildet ist und sich von einer Fahrzeugbreiterichtung aus gesehen ausbreitet.

2. Das Grätsch-Typ-Fahrzeug gemäß Anspruch 1, bei dem:
die Ausnehmung (54) ferner eine Trageoberfläche (54c, 54d) aufweist, die auf einer Seite der Führungsoberfläche (54a) und Abflussoberfläche (54b) angeordnet ist.

3. Das Grätsch-Typ-Fahrzeug gemäß Anspruch 2, bei dem:
die Trageoberfläche folgende Merkmale aufweist:
eine erste Trageoberfläche (54c), die über der Führungsoberfläche (54a) angeordnet ist; und
eine zweite Trageoberfläche (54d), die unter der Führungsoberfläche (54a) angeordnet ist.

4. Das Grätsch-Typ-Fahrzeug gemäß Anspruch 3, bei dem:
die erste Trageoberfläche (54c) im Allgemeinen parallel zu einer horizontalen Richtung ist.

5. Das Grätsch-Typ-Fahrzeug gemäß Anspruch 3 oder 4, bei dem:
die zweite Trageoberfläche (54d) im Allgemeinen parallel zu einer vertikalen Richtung ist.

6. Das Grätsch-Typ-Fahrzeug gemäß einem der Ansprüche 1 bis 5, bei dem:
die Abflussoberfläche (54b) hintere Abschnitte aufweist, die breiter sind als vordere Abschnitte derselben.

7. Das Grätsch-Typ-Fahrzeug gemäß einem der Ansprüche 1 bis 6, bei dem:
eine Außenkante (54bL) der Abflussoberfläche (54b), von einer Fahrzeugbreiterichtung aus gesehen, mit einer Oberfläche (50b) der zweiten Wand (50) der Ausbuchtung (46) verbunden ist.

8. Das Grätsch-Typ-Fahrzeug gemäß Anspruch 7, bei dem:
die Ausbuchtung (46) von der Oberfläche der Unterabdeckung (36) aus gemessen in einem hinteren Abschnitt eine größere Vorsprungshöhe aufweist als in einem vorderen Abschnitt.

9. Das Grätsch-Typ-Fahrzeug gemäß Anspruch 8, bei dem:
die Ausbuchtung (46) von einer Seite des Fahrzeugs aus gesehen in einem hinteren Abschnitt eine größere Abmessung von oben nach unten aufweist als in einem vorderen Abschnitt.

10. Das Grätsch-Typ-Fahrzeug gemäß Anspruch 8 oder 9, bei dem:
eine Länge (L1), gemessen in einer Richtung des Fahrzeugs von vorne nach hinten, einer Region der Oberfläche (50b) der zweiten Wand (50), die hinter der Abflussoberfläche (54b) angeordnet ist, geringer ist als eine Länge (L2) der Führungsoberfläche (54a) in einer Richtung des Fahrzeugs von vorne nach hinten.

11. Das Grätsch-Typ-Fahrzeug gemäß einem der Ansprüche 1 bis 10, bei dem:
die Abflussoberfläche (54b) eine Außenkante (54bL) aufweist, von einer Fahrzeugbreiterichtung gesehen, die hinter einer Innenkante (54bR) angeordnet ist.

12. Das Grätsch-Typ-Fahrzeug gemäß einem der Ansprüche 1 bis 11, bei dem:
eine Unterkante der Abflussoberfläche (54b) hinter einer Oberkante der Abflussoberfläche (54b) angeordnet ist.

13. Das Grätsch-Typ-Fahrzeug gemäß einem der Ansprüche 1 bis 12, bei dem:
der Seitenständer (40) ein Kontaktbauglied (40a) umfasst, das den Schalter (42) kontaktiert, wenn derselbe das Fahrzeug trägt, und
das Kontaktbauglied (40a) von der Seitenansicht des Fahrzeugs aus gesehen in der Öffnung (38) angeordnet ist.

14. Das Grätsch-Typ-Fahrzeug gemäß einem der Ansprüche 1 bis 13, bei dem:
der Seitenständer (40) von einer Seitenansicht des Fahrzeugs aus gesehen höher angeordnet ist als eine Unterkante der Ausbuchtung (46).

## Revendications

1. Véhicule de type à selle, comprenant:
un marchepied (34);
une cachette (36) située sous le marchepied (34) et comprenant une ouverture (38) exposant une béquille latérale (40); et
un commutateur (42) situé à l'intérieur de la cachette (36) et adapté pour détecter un état de la béquille latérale (40),
dans lequel la cachette (36) comporte un renflement (46) formé en avant de l'ouverture (38) de manière à ressortir d'une surface de la cachette (36),
**caractérisé en ce que**
le renflement (46) comprend:
une première paroi (48) venant en recouvrement avec le commutateur (42), vu en vue latérale du véhicule;
une deuxième paroi (50) formant, avec la première paroi (48), une nervure (52) s'étendant dans une direction de l'avant vers l'arrière du véhicule, et venant en recouvrement avec le commutateur (42), vu en vue de dessous du véhicule; et
un évidement (54) formé sur une surface de la deuxième paroi (50), et
l'évidement (54) comprend:
une surface de guidage (54a) continue depuis une région de la surface de la cachette (36) qui est située en avant de l'évidement (54) et s'étendant dans une direction de l'avant vers l'arrière du véhicule; et
une surface de décharge (54b) formée adjacente à un bord arrière de la surface de guidage (54a) et s'étalant vu dans une direction de largeur du véhicule.

2. Véhicule de type à selle selon la revendication 1, dans lequel:
l'évidement (54) comprend par ailleurs une surface de support (54c, 54d) située sur un côté de la surface de guidage (54a) et de la surface de décharge (54b).

3. Véhicule de type à selle selon la revendication 2, dans lequel:
la surface de support comprend:
une première surface de support (54c) située au-dessus de la surface de guidage (54a); et
une deuxième surface de support (54d) située au-dessous de la surface de guidage (54a).

4. Véhicule de type à selle selon la revendication 3, dans lequel:
la première surface de support (54c) est généralement parallèle à une direction horizontale.

5. Véhicule de type à selle selon la revendication 3 ou 4, dans lequel:
la deuxième surface de support (54d) est généralement parallèle à une direction verticale.

6. Véhicule de type à selle selon l'une quelconque des revendications 1 à 5, dans lequel:
la surface de décharge (54b) présente des parties arrière plus larges que ses portions avant.

7. Véhicule de type à selle selon l'une quelconque des revendications 1 à 6, dans lequel:
un bord extérieur (54bL) de la surface de décharge (54h), vu dans une direction de largeur du véhicule, est relié à une surface (50b) de la deuxième paroi (50) du renflement (46).

8. Véhicule de type à selle selon la revendication 7, dans lequel:
le renflement (46) présente une hauteur de protubérance plus grande, mesurée depuis la surface de la cachette (36), dans une partie arrière que dans une partie avant.

9. Véhicule de type à selle selon la revendication 8, dans lequel:
le renflement (46) présente une dimension de haut en bas plus grande dans une partie arrière que dans une partie avant, vu depuis un côté du véhicule.

10. Véhicule de type à selle selon la revendication 8 ou 9, dans lequel:
une longueur (L1), mesurée dans une direction de l'avant vers l'arrière du véhicule, d'une région de la surface (50b) de la deuxième paroi (50) qui est situé à l'arrière de la surface de décharge (54b) est plus petite qu'une longueur (L2) de la surface de guidage (54a) dans une direction de l'avant vers l'arrière du véhicule.

11. Véhicule de type à selle selon l'une quelconque des revendications 1 à 10, dans lequel:
la surface de décharge (54b) présente un bord extérieur (54bL), vu dans une direction de largeur du véhicule, situé en arrière d'un bord intérieur (54bR).

12. Véhicule de type à selle selon l'une quelconque des revendications 1 à 11, dans lequel:
un bord inférieur de la surface de décharge (54b) est situé à l'arrière d'un bord supérieur de la surface de décharge (54b).

13. Véhicule de type à selle selon l'une quelconque des revendications 1 à 12, dans lequel:
la béquille latérale (40) comporte un élément de contact (40a) qui entre en contact avec le commutateur (42) lorsqu'elle supporte le véhicule, et
l'élément de contact (40a) est situé à l'intérieur de l'ouverture (38), vu dans en vue latérale du véhicule.

14. Véhicule de type à selle selon l'une quelconque des revendications 1 à 13, dans lequel:
la béquille latérale (40) est située plus haut qu'un bord inférieur du renflement (46), vu en vue latérale du véhicule.
